# EUROPEAN PATENT SPECIFICATION

(11) **EP 4 411 144 B1**
(45) Date of publication and mention of the grant of the patent: **21.01.2026**
(21) Application number: 22872189.0
(22) Date of filing: 26.09.2022
(51) Int. Cl.: F04D 25/08, F04D 25/06, F04D 17/06, F04D 29/42, F04D 29/44

(54) **PORTABLE FAN**
TRAGBARER LÜFTER
VENTILATEUR PORTABLE

(30) Priority: 27.09.2021 CN 202122350626 U; 30.11.2021 CN 202122980532 U; 30.11.2021 CN 202122972162 U; 10.12.2021 CN 202123124225 U; 16.05.2022 CN 202221164340 U
(43) Date of publication of application: 07.08.2024
(60) Divisional application: 25218680.4
(73) Proprietor: Shenzhen Jisu Technology Co., Ltd, Shenzhen, Guangdong (CN)
(72) Inventor: ZHENG, Guanzheng, Shenzhen, Guangdong 518129 (CN); XIE, Jiahang, Shenzhen, Guangdong 518129 (CN); LI, Xiangfu, Shenzhen, Guangdong 518129 (CN); YUAN, Shuiyong, Shenzhen, Guangdong 518129 (CN); XIAO, Xin, Shenzhen, Guangdong 518129 (CN); CAI, Chengrui, Shenzhen, Guangdong 518129 (CN)
(74) Representative: Herrero & Asociados, S.L.
(86) International application number: PCT/CN2022/121246
(87) International publication number: WO 2023/046145

(56) References cited:
- WO-A1-2021/073509
- CN-A- 102 937 117
- CN-A- 111 322 260
- CN-A- 112 879 337
- CN-A- 112 983 867
- CN-U- 206 582 149
- CN-U- 208 686 628
- CN-U- 209 053 814
- CN-U- 212 867 982
- CN-U- 214 145 972
- CN-U- 216 742 067
- CN-U- 216 742 072
- CN-U- 217 029 352
- JP-A- 2009 191 627
- JP-A- 2016 133 001
- KR-A- 20200 104 187
- US-A1- 2014 178 209

## Description

### TECHNICAL FIELD

The present disclosure relates to the field of fans, and in particular to a portable fan with large air volume and large air pressure.

### BACKGROUND

The common fan in daily life is the axial fan, the characteristics of the axial fan is that the path of the wind from the air inlet to the air outlet will not be offset radially, which is basically equivalent to the straight in and out, the wind enters the axial fan from the air inlet end axially, and then leaves axially from the air outlet end, which has small wind resistance, so the air volume loss is small. That is to say, those skilled in the art in the default situation, if they want to ensure that the air volume loss is small, will use axial fan blades to manufacture axial fan, over time, this forms a consensus, and then forms a technical bias that is difficult to change;

However, unlike other companies in the field that pursue low R&D costs and quickly produce products to seize market profits, the inventor of the present application has been deeply engaged in the field of fan technology, and has a deep understanding of fluid theory, fan product market and user pain points. After the research of the industry, it is found that taking the handheld fan or the ordinary desktop fan as an example, although the existing axial fan has small wind resistance and small air volume loss, it does not take into account other technical problems at all, that is, the air pressure of the axial fan is lower and the air supply distance is shorter. That is to say, although there is no loss of air volume, there is no increment to supplement, and the air supply distance is difficult to guarantee, so the general use distance of ordinary portable fans is about 1-1.5 meters, and you can't experience the refreshing feeling of blowing and enjoying the cool air if you are a little farther away. At the same time, because the fan blades are visible, the axial fan is easy to cut the fingers when infants and young children use it, or if foreign objects such as toys and chopsticks are stretched into the fan blades, it is easy to break or even debris flies and cuts the human body, and the existing axial flow fan has been completely unable to meet the user's safe use needs.

Moreover, the inventor of the present disclosure finds that some portable fans adopt centrifugal fan blades to overcome the difficulty of low air pressure, but after the wind enters the centrifugal fan axially from the air inlet end, and then leaves radially from the air outlet end, the wind direction changes greatly, the air volume loss is very serious, and the air output effect is difficult to meet the user's requirements.

In addition, although it is well known in the industry that Dyson has launched a blade-shrouded fan, in order to achieve the use of air volume, it is manufactured by ultra-high-speed fans, so its volume is generally 30*30* 150CM3 (cubic centimeter), occupies a very large area, inconvenient to use and inconvenient to carry, in addition, the price of Dyson's fan products is generally about 3000-8000 yuan, which is very expensive for ordinary families or individuals, and can even be said to be luxury, so this has no use value for ordinary users.

In recent years, there have been products and patents imitating Dyson's blade-shrouded fans, and they have also been used in portable scenarios such as handheld, but because the product cannot be thin, or because the pursuit of thinness and light is too much and the air volume and wind power are sacrificed, it cannot meet the needs of users, especially if the product uses an oblique flow fan, the motor and wind noise form a sharp and piercing noise, which is not acceptable to the user, so it cannot form a fan product with excellent performance.

Due to the existence of the above-mentioned technical problems and technical biases, the existing portable fans have been completely unable to meet the user's use needs, and at the same time, with the improvement of living standards, the abundance of fan application scenarios, people's requirements for portable fans that can be carried around are also getting higher and higher. The in-depth study of the use safety issues and market products found that after several years of research and experiments, the inventor of the present application proposes a portable blade-shrouded fan to design a structure with large air volume, large air pressure and low noise on a small portable fan to solve many of the above-mentioned problems in the field of this art.

The Chinese patent application No. CN111322260A discloses a handheld fan. A flow guiding hook face with the structure that the diameter is gradually increased from an air inlet to an airoutlet is arranged on the outer ring wall of a flow guiding cover; a front shell inner curved surface with the structure that the diameter is gradually decreased from the air inlet to the air outlet is arranged on the inner ring wall of the upper end of a front shell; a rear shell inner curved surface with the structure that the diameter is gradually increased from the air inlet to the air outletis arranged on the inner ring wall of the upper end of a rear shell; and the rear shell inner curved surface and the front shell inner curved surface are spliced into an air passage with the hole diameter at the two ends being smaller than the hole diameter in the middle. A mixed air flow sprayed out at a high speed makes air soft and skin-friendly, meanwhile the enough air volume is further ensured, and the handheld fan is small in structure, portable and easy to carry.

The Chinese patent application No. CN102937117A discloses a bladeless fan which comprises a nozzle, an air flow generating device and a flow guide device arranged on the periphery of the nozzle. The nozzle comprises a container, an air outlet and an air inlet, wherein the air outlet and the air inlet are arranged on the wall of the container. The air flow generating device is positioned in the container, and the surface in the flow guide device and the surface outside the container define a flow guide channel. The air flow generating device converts air flowing in from the air inlet into high-pressure air flow and sprays the high-pressure air flow through the air outlet. Air around the nozzle is entrained by the air flow sprayed out of the air outlet and passes through the flow guide channel. The air flow output by the bladeless fan has low-turbulence and linear flow profile.

The Chinese patent application No. CN112983867 discloses a handheld beauty mirror fan. The handheld beauty mirror fan comprises a front shell and a rear shell, wherein the front shell and the rear shell are buckled to form a containing cavity, and a motor, a fan impeller and an air duct ring are coaxially arranged in the containing cavity; the front shell comprises an annular outer shell and a wind scooper coaxially arranged with the annular outer shell, and an annular air outlet is formed between the annular outer shell and the wind scooper; the motor is fixed to the center of the rear shell, and an output shaft of the motor is connected with the fan impeller which is located in the air duct ring; an annular air outlet duct is formed between the air duct ring and the wind scooper, is communicated with the annular air outlet, and is gradually reduced from an air inlet to the air outlet; and the air inlet is formed in the rear shell. According to the handheld beauty mirror fan, through the design of the air inlet, the annular air outlet and the annular air outlet duct, the air inlet effect and the air outlet effect are best; the annular air inlet is designed in a hidden manner, so that potential safety hazards in the using process are reduced; and a glass lens is additionally arranged at the annular air outlet, so that a product has versatility

The Korean patent application No. KR20200104187A discloses a portable fan and an air purifier combined with the portable fan. The portable fan includes: a rotating blade including a first rotating blade and a second rotating blade positioned below the first rotating blade; an electric fan body including a vent formed at the front and rear of the rotating blades to accommodate the rotating blades and allow the wind to pass through the rotating blade; a control circuit board located at a lower end of the rotating blade inside the electric fan body to control the operation of the rotating blade; a first wiring electrically connected from the first rotating blade to the control circuit board; and a second wiring electrically connected from the second rotary blade to the control circuit board.

### SUMMARY OF THE DISCLOSURE

The present disclosure provides a portable blade-shrouded fan, which generates oblique flow wind by setting a mixed-flow fan rotation in the housing, pressurizes the oblique flow wind by pressurizing the pressurized parts at the same time, and combing the oblique flow wind with a plurality of second blades, so as to blow out the wind with wind pressure, large wind force and low noise.

### BRIEF DESCRIPTION OF THE DRAWINGS

FIG. 1 is a perspective view of a portable blade-shrouded fan according to a first embodiment of the present disclosure.
FIG. 2 is a decomposition schematic view of the portable blade-shrouded fan according to the first embodiment of the present disclosure.
FIG. 3 is a decomposition schematic view of the portable blade-shrouded fan according to the first embodiment of the present disclosure at another angle.
FIG. 4 is a cross-sectional view of the portable blade-shrouded fan according to the first embodiment of the present disclosure.
FIG. 5 is a cross-sectional view of the portable blade-shrouded fan according to the first embodiment of the present disclosure in another direction.
FIG. 6 is a schematic view of a front portion of a second housing, a pressurizing member, and a handle, and a wire plate of a portable blade-shrouded fan according to an embodiment of the present disclosure.
FIG. 7 is a perspective schematic view of a portable blade-shrouded fan according to an embodiment of the present disclosure with a first housing removed.
FIG. 8 is a perspective view of a portable blade-shrouded fan according to a second embodiment of the present disclosure, which is not according to the claimed invention.
FIG. 9 is a decomposition schematic view of the portable blade-shrouded fan according to the second embodiment of the present disclosure.
FIG. 10 is a decomposition schematic view of the portable blade-shrouded fan according to the second embodiment of the present disclosure at another angle.
FIG. 11 is a cross-sectional view of the portable blade-shrouded fan according to the second embodiment of the present disclosure.
FIG. 12 is a cross-sectional view of the portable blade-shrouded fan according to the second embodiment of the present disclosure in another direction.
FIG. 13 is a schematic view of a front portion of a second housing, a pressurizing member, and a handle, and a wire plate of a portable blade-shrouded fan according to an embodiment of the present disclosure.

### DETAILED DESCRIPTION

Technical solutions of the embodiments of the present disclosure will be clearly and completely described below by referring to the accompanying drawings in the embodiments of the present disclosure. Apparently, the described embodiments are only a part of, not all of, the embodiments of the present disclosure. The present invention is solely defined by the appended claims.

The terms "first", "second", and "third" in the specification and claims of the present disclosure and the drawings are used to distinguish between different objects, instead of describing a particular order. In addition, the term "comprising" and any variations thereof are intended to cover non-exclusive inclusion. For example, a process, a method, a system, a product or an apparatus comprising a series of operations or units is not limited to the listed operations or units, but may further include operations or units that are not listed, or include other operations or units that are inherently included in the process, the method, the system, the product or the apparatus.

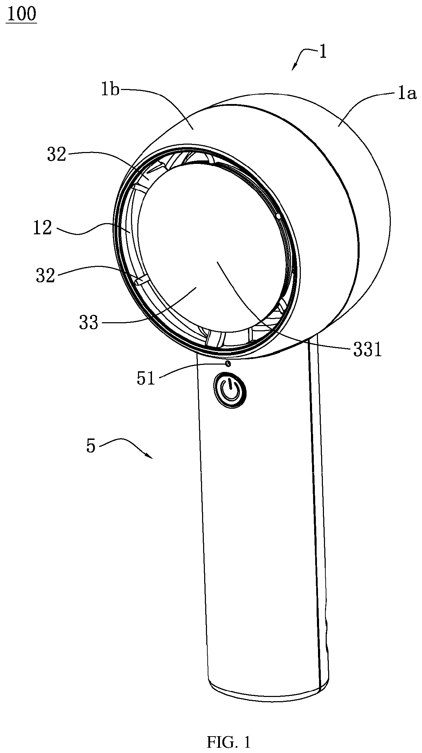

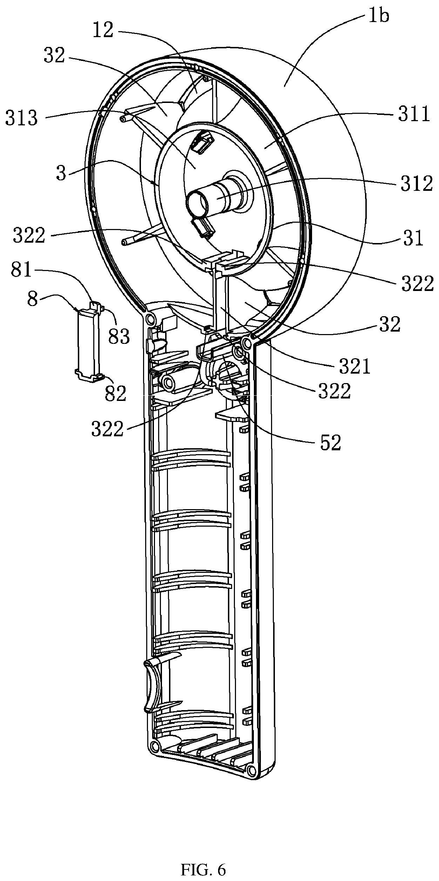

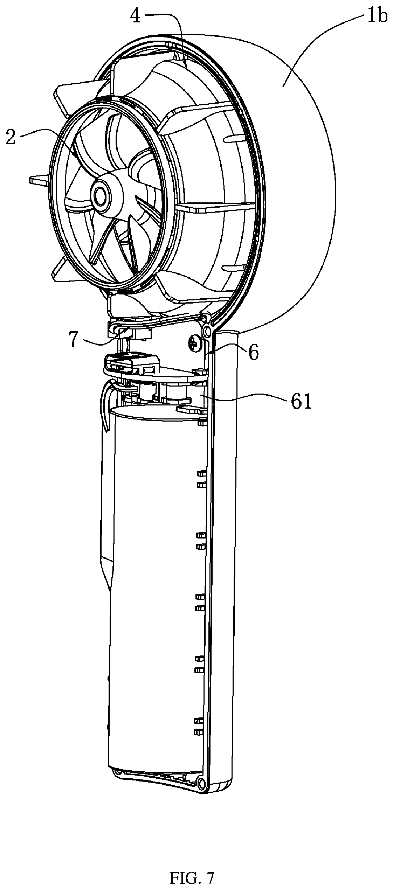

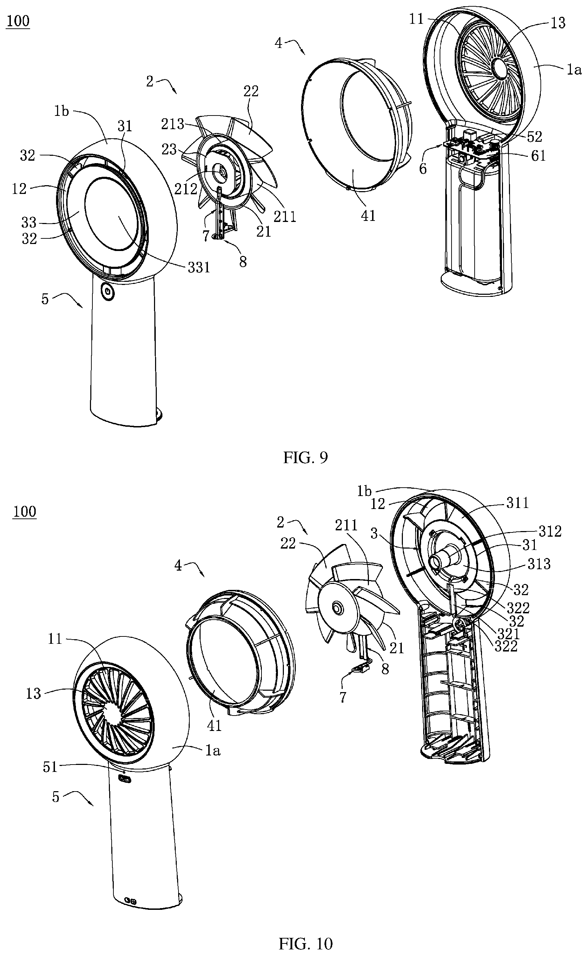

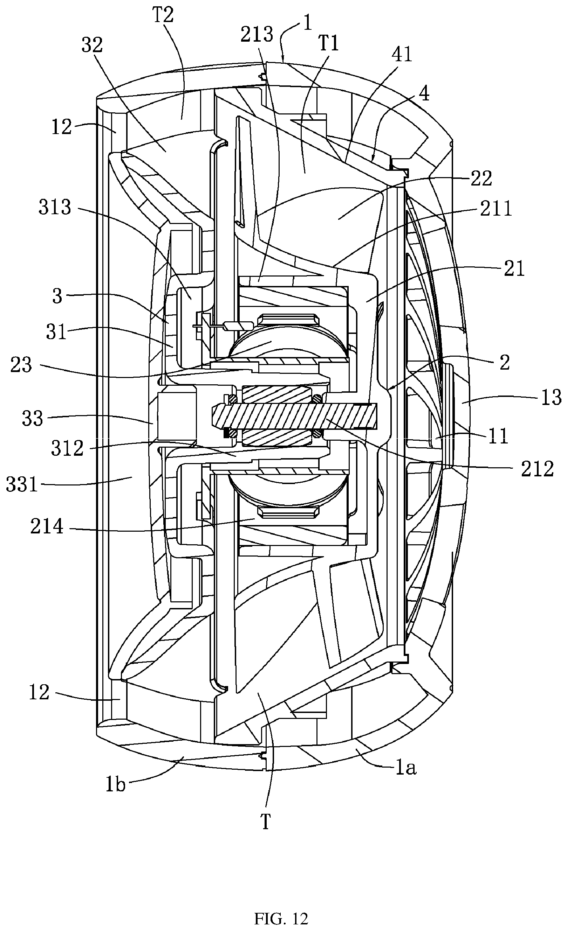

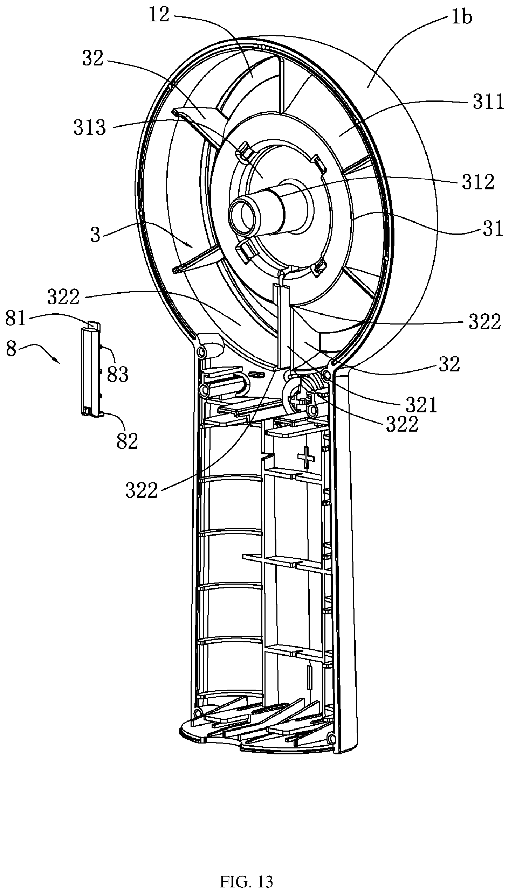

As shown in FIGS. 1 to 13, which are schematic diagrams of a portable blade-shrouded fan 100 according to a first embodiment of the present disclosure, the portable blade-shrouded fan 100 is a hand-held blade-shrouded fan, and the portable blade-shrouded fan 100 includes a handle 5 for the user to hold. Of course, the portable blade-shrouded fan 100 may be a clamping fan configured with a clip, a transformable fan configured with a bendable member for shaping and winding, a desktop fan configured with a stand, a floor fan configured with a telescopic stand, or a small fan not configured with the handle 5, clip, bendable member, stand, telescopic stand, etc., without being limited herein.

In other embodiments, a semiconductor cooling member (not shown) may be arranged on the handle 5, such that the user may carry the portable blade-shrouded fan 100 by means of the handle 5, and the semiconductor cooling member may automatically correspondingly adjust the cooling temperature according to the temperature of a portion that the user is in contact with the handle 5, thereby enhancing the user's comfort in carrying the fan. It should be understood that the portable blade-shrouded fan 100 is configured for blowing airflow to dissipate heat and cool down, and correspondingly, the semiconductor cooling member is configured for refrigeration. When a heating element is added to the portable blade-shrouded fan 100 for heat preservation, the semiconductor cooling member may further be configured for heat production to keep warm.

As shown in FIGS. 1 to 3, the portable blade-shrouded fan 100 includes a housing 1, a pressurizing member 3, and a mix-flow fan 2, the housing 1; a profile of the radial cross-section of each of the housing 1, the pressurizing member 3, and the mix-flow fan 2 has a substantially circular shape. The pressurizing member 3 is connected to a front side portion of the housing 1, and the pressurizing member 3 and the housing 1 are integrally molded. Of course, the pressurizing member 3 and the housing 1 may be separately molded, and the pressurizing member 3 is assembled to the housing 1. The mix-flow fan 2 is disposed in the housing 1 and is connected to a rear side of the pressurizing member 3, and the mix-flow fan 2 is rotatable around a rotation shaft 212 to generate an airflow. The extension direction perpendicular to and through the rotation shaft 212 is a radial direction, and the direction parallel to the rotation shaft 212 is an axial direction.

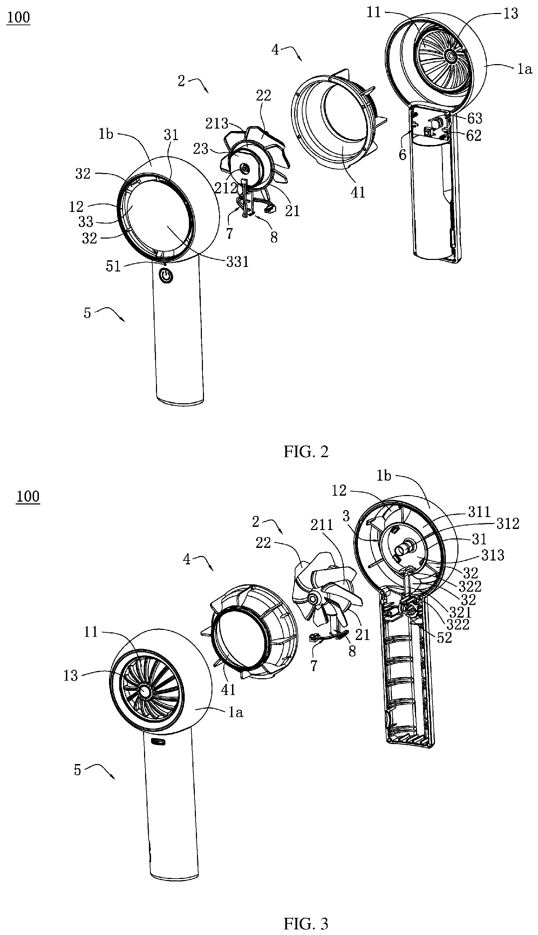

As shown in FIGS. 2 to 4, a rear side of the housing 1 is arranged with an air inlet portion 11 and, and a rear side of the housing 1 is arranged with an air outlet portion 12, the air inlet portion 11 and the air outlet portion 12 being connected within the housing 1. The air inlet portion 11 is disposed on an air inlet plate 13 and the air outlet portion 12 is disposed between a front end of the pressurizing member 3 and a front end of the housing 1. A lower end of the housing 1 forms the handle 5 for hand-held use by the user. The housing 1 includes a first housing 1a and a second housing 1b that can be mated with each other in a front-back direction. The first housing is firstly gradually increased along a radial direction of the air inlet portion from the front side to the rear side and is subsequently increased along the radial direction from the rear side to the front side. The second housing is gradually decreased along the radial direction from the rear side to the front side. The first housing 1a first extends radially enlarged backwardly only with a small section, that is, the first housing 1a as a whole can be considered to extend radially enlarged forwardly, such that the whole is curved and has a beautiful appearance. The small section of the first housing 1a extending radially enlarged backward may make the air inlet plate 13 partially received in the first housing 1a, such that the air inlet plate 13 will not be so obvious and unharmonious. The ratio of the length between front and rear ends of the first housing 1a and the length between front and rear ends of the second housing 1b is 0.9 to 1 or 1 to 1.2, which may achieve miniaturization while reasonably balancing a good relationship between the air volume and the airflow pressure. Further, the ratio close to 1:1 may make the first housing 1a and the second housing 1b more aesthetically pleasing in appearance.

As shown in FIGS. 2 to 4, the mix-flow fan 2 includes a rotation seat 21 and a plurality of first blades 22, where the rotation seat 21 includes a radially enlarged airflow guiding surface 211 from back to front; the plurality of the first blades 22 are connected to and spaced apart on the airflow guiding surface 211, and specifically, the plurality of the first blades 22 are arranged equidistant on the airflow guiding surface 211. Each first blade 22 extends helically at a predetermined angle from back to front and along a circumferential direction of the airflow guiding surface 211. When viewed from back to front, the space between any two adjacent the first blades 22 on their front ends is longer than the space between the two adjacent the first blades 22 on their rear ends, which may facilitate increasing the air inlet. The rotation seat 21 is substantially in the shape of a truncated cone, i.e., the rotation seat 21 has a radial cross-sectional area at its rear end smaller than a radial cross-sectional area at its front end. That is, the rotation seat 21 has a relatively large radial cross-section at its front end. The rotation seat 21 further includes an extension wall 213 connected to an inner wall of the rotation seat 21 and extending forwardly, the extension wall 213 together with the rotation seat 21 enclosing to define a first cavity 214 with an opening facing forwardly.

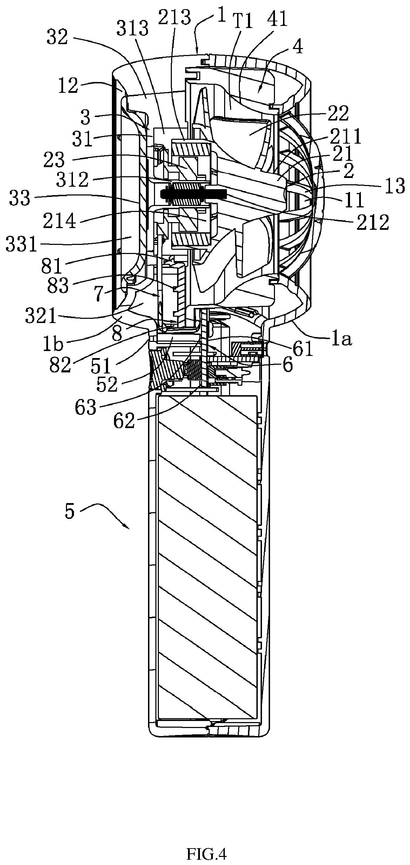

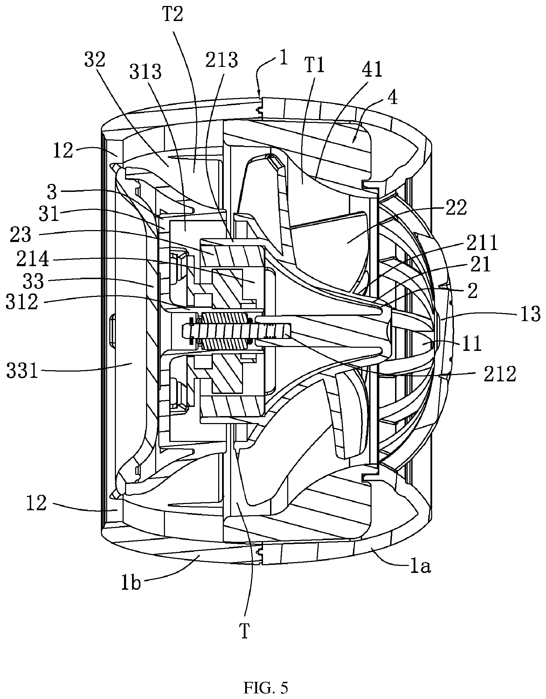

As shown in FIGS. 4 and 5, at least a portion of the airflow guiding surface 211 is recessed towards the rotation shaft 212. It should be understood that at least a portion of the airflow guiding surface 211 may be recessed towards the rotation shaft 212 to allow the mix-flow fan 2 to gather an expanded air volume and create a high air pressure. Of course, the airflow guiding surface 211 may be an inclined plane or may be at least partially protruding towards a direction away from the rotation shaft 212, which is not limited herein.

As shown in FIGS. 3 to 5, the pressurizing member 3 includes a pressurizing seat 31 and a plurality of second blades 32, where the pressurizing seat 31 includes a pressurizing surface 311 that is at least partially radially enlarged from back to front; the plurality of the second blades 32 are connected to and spaced apart on the pressurizing surface 311, and specifically, the plurality of the second blades 32 are arranged equidistantly on the pressurizing surface 311; the plurality of the second blades 32 are connected to the housing 1. After an oblique airflow generated by the mix-flow fan 2 flows to the pressurizing surface 311, the plurality of the second blades 32 re-arrange and transform the airflow to form a direct current airflow blowing out parallel to the rotation shaft 212, so as to increase the blowing distance and reduce the turbulence, noise, and vibration, which may reduce the noise emitted from the turbulence crosstalk for realizing noise reduction, and to convert the sharp sound into a low sound, thereby reducing the noise of the mixed-flow airflow generated by the mix-flow fan 2. In addition, a static pressure may be increased, energy consumption may be reduced, and the concentration of the air out of the mix-flow fan 2 may be enhanced. That is, the second blades 32 may equalize the airflow formed by the mix-flow fan 2 and increase the airflow pressure. The pressurizing seat 31 is connected to the housing 1 through the second blades 32, the rotation seat 21 is connected to the pressurizing seat 31 through a fixing fit structure, and the mix-flow fan 2 is relatively fixed in the housing 1 through the pressurizing seat 31. A radius value of a maximum radius surface on a front end of the pressurizing member 3 is 21.3 to 22 mm, such that the portable blade-shrouded fan is easy to carry while ensuring sufficient air volume and air pressure.

As shown in FIGS. 3 to 5, at least a portion of the pressurizing surface 311 is radially enlarged from back to front, while at least a portion of the pressurizing surface 311 is recessed towards the rotation shaft 212. At least a portion of the airflow guiding surface 211 and at least a portion of the pressurizing surface 311 are both radially recessed, to form concave surfaces for absorbing some noise from the airflow. Specifically, the pressurizing surface 311 is generally radially increasing from back to front. Of course, in other embodiments, in the direction from back to front, the pressurizing surface 311 may extend forward parallel to the rotation shaft 212 before radially increasing, or extend radially decreasing and then radially increasing, which is not limited herein.

As shown in FIGS. 3 to 5, the pressurizing seat 31 is substantially in the shape of a truncated cone, i.e., the pressurizing seat 31 has a radial cross-sectional area at its rear end smaller than a radial cross-sectional area at its front end. That is, the pressurizing seat 31 has a relatively large radial cross-section at its front end. A radius of the radial cross-section on the front end of the pressurizing seat 31 is 21.3 to 22 mm, for expanding the air blowing area while ensuring sufficient air volume and air pressure. Each of the airflow guiding surface 211 and the pressurizing surface 311 is generally radially enlarged in a flared shape to form an outwardly expanding pressurizing ramp, and the pressurizing seat 31 has a thickness of 9.5~14.5mm in the front-back direction to greatly increase the pressurizing stroke of the airflow. Further, the pressurizing ramp may cooperate with the housing 1 to convert the sharp noise into a low sound. In the direction from back to front, the pressurizing seat 31 extends radially enlarged and the second housing 1b extends radially reduced. That is, the second housing 1b and the pressurizing seat 31 extend forward while extending close to each other, such that the airflow is pressurized out of a gap defined by the front end of the pressurizing seat 31 and the front end of the second housing 1b, which is conducive to increasing the airflow force, the airflow pressure, and the distance of the air delivery.

As shown in FIGS. 4 and 5, the rotation seat 21 and the pressurizing seat 31 are arranged in close spacing in the axial direction, the airflow guiding surface 211 and the pressurizing surface 311 are arranged in close spacing in the axial direction, and a spacing between the rotation seat 21 and the pressurizing seat 31 in the axial direction and a spacing between the airflow guiding surface 211 and the pressurizing surface 311 in the axial direction are each 1~4 mm, thereby enabling the mix-flow fan 2 to form a smooth airflow to the pressurizing surface 311, and thus reducing the noise generated by turbulent flow. The radial cross-section of the rotation seat 21 at its front end and the radial cross-section of the pressurizing seat 31 at its rear end are each circular, with a very small difference in radii. In some embodiments, the difference in radii between the radial cross-section of the rotation seat 21 at its front end and the radial cross-section of the pressurizing seat 31 at its rear end is less than 1 mm, allowing the airflow generated by the mix-flow fan 2 to flow smoothly to the pressurizing surface 311.

As shown in FIGS. 3 to 5, the pressurizing seat 31 defines a second cavity 313 with an opening facing downwardly, the extension wall 213 is inserted forwardly into the second cavity 313, and the first cavity 214 and the second cavity 313 at least partially overlap in the radial direction to reduce the occupied space. The mix-flow fan 2 further includes a motor 23, the motor 23 being an external rotor brushless motor 23, and the motor 23 is received in the first cavity 214 and the second cavity 313. The opening of the first cavity 214 and the opening of the second cavity 313 face towards and are communicated with each other to shield noise generated by the motor 23 and airflow noise, thereby converting the sharp noise into la ow sound. Further, the fixing fit structure of the mix-flow fan 2 and the pressurizing member 3 is received in the first cavity 214, making excellent use of space. The fixing fit structure specifically includes the rotation shaft 212 protruding forwardly from within the first cavity 214 and a post 312 formed by protruding backwardly from the second cavity 313, the rotation shaft 212 being inserted into the post 312 and fixed through a bearing part. The external rotor brushless motor 23 has a service life of up to 15,000 hours and is free of the electrical sparks generated during operation of the brushed motor 23, which may greatly reduce the interference of the electrical sparks to a remote-control radio equipment. Further, the friction is greatly reduced during operation in a brushless manner, which results in smooth operation and good noise reduction.

As shown in FIGS. 4 and 5, a safe pressurized distance exists between the air inlet plate 13 and a rear end of the rotation seat 21, allowing for a maximum pressurized deformation of the air inlet plate 13 within an allowable pressure range regarding material properties of the air inlet plate 13. In the embodiments, the distance between the air inlet plate 13 and the rear end of the rotation seat 21 is 5.5 to 7.5 mm, in order to have space at the rear end for the entry of a high volume of air, and have space for a maximum pressurized deformation of the air inlet plate 13 when subjected to the high volume of air. The radial cross-sectional area of the air inlet plate 13 is greater than or equal to a maximum radial cross-sectional area of the rotation seat 21, to ensure sufficient air inlet and to achieve noise reduction, thereby converting the sharp noise into a low sound. The radial cross-sectional area of the air inlet plate 13 is less than or equal to the radial cross-sectional area of the pressurizing seat 31 at its front end, and the air inlet portion 11 on the air inlet plate 13 is obscured by the pressurizing seat 31. When the portable blade-shrouded fan is in use, the air inlet portion 11 is not visible when viewing from front to back, i.e. light from the air inlet portion 11 is not projected from back to front, thereby reducing the effect of the rotation of the mix-flow fan 2 on the human eyes. As the rotation seat 21 is radially enlarged from back to front, the first blades 22 are closer to the air inlet plate 13 compared to the rotation seat 21, thereby enhancing a suction capacity of the mix-flow fan 2.

As shown in FIGS. 4 and 5, the front end of the pressurizing member 3 is recessed backwardly, and the front end of the pressurizing member 3 is further arranged with a front cover 33. The front cover 33 is recessed backwardly to form a negative pressure region 331, such that a localized airflow runs closely along a front surface of the front cover 33 after being blown out of the air outlet portion 12, thereby performing an airflow-compensation on the negative pressure region 331 and reducing turbulence. In other embodiments, the front cover 33 may be an IP image item that is detachable and interchangeable, and the front cover 33 may be exposed or covered by at least partially transparent material to enhance user interaction with the IP image item. By setting up the detachable and interchangeable front cover 33, the need to customize different molds for different partners may be avoided. That is, a set of molds can be applied to multiple IP partners, which may reduce the production cost of the IP partners by about 40%. Further, the exposed IP image item may increase the user's direct touching of the IP image item, thereby changing the traditional experience of using the IP image item. The front cover 33 may be configured to hold an aromatherapy component or a component that combines humidification and aromatherapy, or to store a USB cable, or as a mirror with LED lights, etc., which is not limited herein.

As shown in FIG. 3 to 5, the portable blade-shrouded fan 100 further includes a booster 4 that is arranged inside the housing 1 and surrounds a periphery of the mix-flow fan 2. In addition to having the effect of pressurization, the booster 4 further has a noise reduction effect similar to that of acoustic glass. A first channel T1 is formed between the mix-flow fan 2 and the booster 4, a second channel T2 is formed between the pressurizing member 3 and the housing 1, and the first channel T1 and the second channel T2 together form a pressurizing guiding channel T. The airflow is conducted from the air inlet portion 11 through the pressurizing guiding channel T, and then is conducted out from the air outlet portion 12. A front end of the booster 4 is connected to a portion of the pressurizing member 3 near the second housing 1b, i.e. the booster 4 is assembled forwardly to a rear side of the second blades 32. A rear end of the booster 4 is connected to a portion of the first housing 1a near the air inlet portion 11, with a spacing being defined between the booster 4 and the first housing 1a, for absorbing the noise generated by the rotation of the mix-flow fan 2.

As shown in FIGS. 3 to 5, the booster 4 includes a booster surface 41 facing the mix-flow fan 2 and at least partially radially enlarged from back to front. At least a portion of the airflow guiding surface 211 and at least a portion of the pressurizing surface 311 are both radially recessed, to form concave surfaces, while at least a portion of the booster surface 41 is radially protruding to form a convex surface, thereby increasing the volume within the pressurizing guiding channel T to gather the air volume. The distance of a minimum radial gap between the first blades 22 and the pressurizing surface 41 is maintained within an error range of an equivalent isolation distance, to isolate the airflow generated by the mix-flow fan 2 at its front end from flowing back around the minimum radial gap to its rear end, thereby increasing air pressure and reducing the noise from turbulent crosstalk.

As shown in FIGS. 3 to 5, the front end of the booster 4 is flush with a front end of the mix-flow fan 2, or the front end of the booster 4 protrudes forwardly over the front end of the mix-flow fan 2, for fully pressurizing. The height of the front end of the booster 4 is 1.4 to 3.7 mm, and the front end of the booster 4 and the housing 1 are stepped, such that the high-pressure air formed by the mix-flow fan 2 may flow quickly to the pressurizing member 3.

As shown in FIGS. 3, 4, 6 and 7, one of the second blades 32 defines a wire-through slot 321. In the embodiments, the second blade 32 connected to the handle 5 defines the wire-through slot 321, the wire-through slot 321 being in communication with the first cavity 214. At least a portion of a main board 6 is arranged in the handle 5. In the embodiments, a portion of the main board 6 is arranged in the handle 5, and another portion of the main board 6 is arranged in the housing 1, where the main board 6 is disposed behind the wire-through slot 321 in the front-back direction, and the main board 6 at least partially overlaps with the wire-through slot 321 in the front-back direction. A wire 7 connects the motor 23 to the main board 6, and specifically, the wire 7 is connected from the motor 23 to the main board 6 through the wire-through slot 321. The main board 6 includes a first surface 61 and a second surface 62 parallel to each other, the first surface 61 facing backwardly, and the second surface 62 facing forwardly. An end of the wire 7 is connected to the motor 23, and the other end of the wire 7 is connected to the main board 6 and disposed on the first surface 61. If the wire 7 is arranged on the second surface 62 of the main board 6, an assembler will have to mount the main board 6 in the housing 1 and the handle 5 with the wire 7 being obscured, which may result in the assembler not being able to ensure that the wire 7 is not squeezed by the main board 6, such that the wire 7 is easily pressed and damaged, the assembly is inconvenient, and is prone to be reworked. Therefore, the arrangement of the wire 7 on the first surface 61 of the main board 6 is conducive to improving assembly quality and assembly efficiency.

As shown in FIG. 3, FIG. 4, FIG. 6 and FIG. 7, a rear side of the wire-through slot 321 is further arranged with a wire plate 8 to restrict the wire 7 from moving. Each of both ends of the wire-through slot 321 is arranged with a resisting block 322 extending backwardly, the resisting block 322 being abutted against the wire plate 8 to restrict the wire plate 8 from moving on a mounting plane. An end of the wire plate 8 near the motor 23 extends toward the wire-through slot 321 to form a snap 81, the snap 81 being snap-fitted to the resisting block 322 through the wire-through slot 321 to limit a backward movement of the wire plate 8. An end of the wire plate 8 away from the motor 23 extends toward the wire-through slot 321 to form an insertion block 82, the insertion block 82 being insertion-fitted to the wire-through slot 321 to limit a forward movement of the wire plate 8. The wire plate 8 is further arranged with a tab 83 facing the wire-through slot 321, the tab 83 compressing the wire 7 to prevent a rear end of the wire 7 from oscillating in the wire-through slot 321 when the portable blade-shrouded fan is in use, thereby reducing a noise generated by oscillating friction between the wire 7 and the wire-through slot 321.

As shown in FIGS. 3, 4, 6 and 7, the second surface 62 is arranged with a light emitting member 63, the handle 5 defines an aperture 51 corresponding to the light emitting member 63, and a side of the wire-through slot 321 away from the motor 23 is arranged with a light guide post 52. An end of the light guide post 52 abuts against the second surface 62, and the other end of the light guide post 52 is connected to an inner side of the handle 5. Light emitted by the light emitting member 63 is directed along the light guide post 52 and out from the aperture 51. A spacing exists between the booster 4 and the light guide post 52. The wire 7 passes through the wire-through slot 321 and through the spacing between the booster 4 and the light guide post 52, around an outer wall of the booster 4, and then is electrically connected to the first surface 61, which may lead to a more compact and smaller overall structure and higher space utilization.

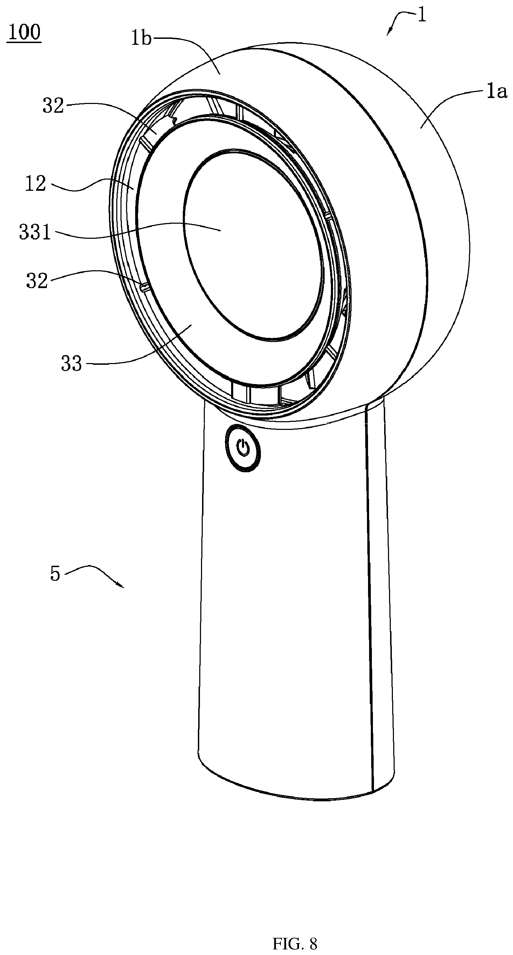

As shown in FIGS. 8 to 13, which are schematic diagrams of a portable blade-shrouded fan 100 according to a second embodiment of the present disclosure, , which is not according to the claimed invention, the portable blade-shrouded fan 100 is larger and flatter than the portable blade-shrouded fan 100 of the first embodiment. In this embodiment, the ratio of the length between the front and rear ends of the first housing 1a and the length between the front and rear ends of the second housing 1b is 1~1.5, which may reasonably balance the relationship between the air volume and the air pressure while realizing lightness and thinness of the portable blade-shrouded fan. A radius value of a maximum radial surface on the front end of the pressurizing member 3 is 28~35mm, i.e. a radius of a radial cross-section on the front end of the pressurizing seat 31 is 28~35mm, which may expand the air blowing area while ensuring sufficient airflow volume and airflow pressure. The extension wall 213 does not forwardly protrude over the rotation seat 21 and the extension wall 213 is not forwardly inserted into the second cavity 313. The first cavity 214 and the second cavity 313 are arranged in close proximity to each other in a spaced apart manner, while the first cavity 214 and the second cavity 313 do not overlap with each other. The distance between the air inlet plate 13 and the rear end of the rotation seat 21 is 7.4 to 9.8 mm. The pressurizing surface 41 is a smooth surface for a smoother airflow towards the pressurizing member 3.

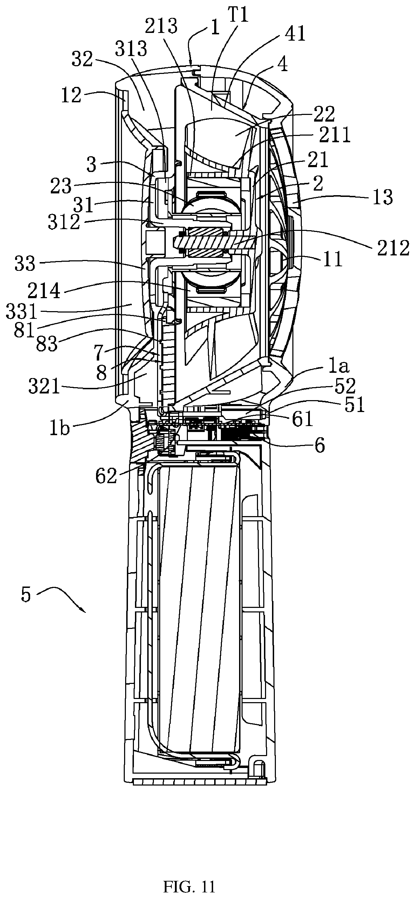

As shown in FIG. 11, in the embodiments, the main board 6 is disposed entirely within the handle 5, and the main board 6 is disposed below the wire-through slot 321. The first surface 61 of the main board 6 faces upwardly and the second surface 62 faces downwardly. The light emitting member 63 is disposed on the first surface 61. The aperture 51 is disposed on the second housing 1b and is connected to an inner side of the second housing 1b corresponding to the light guide post 52. A spacing exists between the booster 4 and the first surface 61. The wire 7 pass through the wire-through slot 321 and through the spacing between the booster 4 and the first surface 61, and is electrically connected to the first surface 61. The constituent elements in the second embodiment are substantially the same as those in the first embodiment, which will not be repeated herein.

## Claims

1. A portable blade-shrouded fan, comprising:
a housing (1), having an air inlet portion (11) at a rear side of the housing (1) and an air outlet portion (12) at a front side of the housing (1), wherein the air inlet portion (11) and the air outlet portion (12) are fluidly connected with each other inside the housing (1);
a mix-flow fan (2), arranged inside the housing (1) and configured to rotate about a rotation shaft (212) to generate an airflow;
a pressurizing member (3), connected to a front portion of the housing (1) and disposed at a front of the mix-flow fan (2), wherein the pressurizing member (3) comprises a pressurizing seat (31) and a plurality of second blades (32), the pressurizing seat (31) comprises a pressurizing surface (311) that is at least partially increased in a radial direction from the rear side to the front side, the plurality of the second blades (32) are spaced apart from each other and are arranged connected to the pressurizing surface (311), the plurality of the second blades (32) are connected to the housing (1), the airflow generated by the mix-flow is capable of being converted into a high-pressure airflow after flowing through the pressurizing surface (311), the plurality of the second blades (32) are configured to re-arrange a direction of the airflow and to reduce a noise of the airflow to convert a sharp sound into a low sound;
wherein the portable blade-shrouded fan is **characterized by** further comprising:
a booster (4), arranged inside the housing (1) and surrounding a periphery of the mix-flow fan (2); wherein a front end of the booster (4) is connected to a portion of the pressurizing member (3) near the housing (1); a rear end of the booster (4) is connected to a portion of the housing (1) near the air inlet portion (11); the front end of the booster (4) is stepped with respect to the housing (1); and
a spacing is defined between the booster (4) and the housing (1).

2. The portable blade-shrouded fan according to claim 1, wherein,
the mix-flow fan (2) comprises a rotation seat (21) and a plurality of first blades (22);
the rotation seat (21) comprises an airflow guiding surface (211) that is increased in the radial direction from the rear side to the front side, the plurality of the first blades (22) are spaced apart from each other and are arranged connected to the airflow guiding surface (211);
the airflow guiding surface (211) and the pressurizing surface (311) are increased in the radial direction to have a flared shape and to form an outwardly expanding pressurizing ramp, the pressurizing ramp is configured to increase a pressurizing path of the airflow, the pressurizing ramp and the housing (1) are cooperatively configured to convert the sharp sound into the low sound;
the rotation seat (21) and the pressurizing seat (31) are directly adjacent to each other and are spaced apart from each other axially;
the airflow guiding surface (211) and the pressurizing surface (311) are directly adjacent to each other and are spaced apart from each other in an axial direction; and
each of a spacing between the rotation seat (21) and the pressurizing seat (31) in the axial direction and a spacing between the airflow guiding surface (211) and the pressurizing surface (311) in the axial direction is in a range from 1mm to 4 mm to guide the airflow generated by the mixed-flow fan to flow smoothly to the pressurizing surface (311) and to reduce a noise generated by a turbulent flow.

3. The portable blade-shrouded fan according to claim 2, wherein,
the rotation seat (21) defines a first chamber having an opening facing to the front side;
the pressurizing seat (31) defines second chamber having an opening facing to the rear side;
the first chamber and the second chamber are at least partially overlapping with each other in the radial direction; the mix-flow fan (2) comprises a motor (23) received in the first chamber and the second chamber, the opening of the first chamber and the opening of the second chamber face towards and are communicated with each other to shield noise generated by the motor (23) to convert the sharp sound to the low sound.

4. The portable blade-shrouded fan according to claim 1, wherein,
a cross section of a front portion of the pressurizing seat (31), taken along the radial direction, has a radius of 21.3mm to 22mm; or a cross section of a front portion of the pressurizing seat (31), taken along the radial direction, has a radius of 28mm to 35mm to increase an airflow area without reducing an airflow amount and an air pressure; and
a thickness of the pressurizing seat (31) in a front-rear direction is in a range from 9.5mm to 14.5mm.

5. The portable blade-shrouded fan according to claim 1, wherein,
a front end of the pressurizing member (3) is recessed towards the rear side;
a front cover (33) is arranged at the front end of the pressurizing member (3), the front cover (33) is recessed towards the rear side to form a negative pressure region to guide a localized airflow, after flowing out of the air outlet portion (12), to flow attachingly along a front surface of the front cover (33) to compensate the negative pressure region and to reduce turbulence.

6. The portable blade-shrouded fan according to claim 1,
wherein a first channel (T1) is formed between the mix-flow fan (2) and the booster (4), a second channel (T2) is formed between the pressurizing member (3) and the housing (1), the first channel (T1) and the second channel (T2) cooperatively form a pressurizing conduction channel, the airflow is capable of flowing from the air inlet portion (11), passing through the pressurizing conduction channel, to reach the fan outlet portion.

7. The portable blade-shrouded fan according to claim 6, wherein,
the housing (1) comprises a first housing (1a) and a second housing (1b) connected to the first housing (1a); the first housing (1a) is firstly gradually increased along a radial direction of the air inlet portion (11) from the front side to the rear side and is subsequently increased along the radial direction from the rear side to the front side;
the second housing (1b) is gradually decreased along the radial direction from the rear side to the front side; and
the booster (4) is spaced apart from the first housing (1a) to absorb the noise generated by rotation of the mix-flow fan (2).

8. The portable blade-shrouded fan according to claim 6, wherein,
the mix-flow fan (2) comprises a rotation seat (21), the rotation seat (21) comprises an airflow guiding surface (211) and a plurality of first blades (22), the airflow guiding surface (211) is at least partially gradually increased in the radial direction from the rear to the front, the plurality of first blades (22) are arranged on the airflow guiding surface (211) and are spaced apart from each other;
the booster (4) comprises a booster surface (41) that faces the mix-flow fan (2) and is at least partially increased in the radial direction from the rear side to the front side;
each of at least a portion of the airflow guiding surface (211) and at least a portion of the pressurizing surface (311) is radially recessed to form a concave surface, at least a portion of the pressurizing surface (311) is radially protruded to form a convex surface; a volume within the pressurizing conduction channel is increased to gather the airflow;
a minimum radial gap between the first blades (22) and the pressurizing surface (311) is maintained within an error range of an equivalent separation distance to prevent the airflow at a front end of the mix-flow from flowing around the minimum radial gap to flow reversely to a rear end of the mix-flow.

9. The portable blade-shrouded fan according to claim 6, wherein
a front end of the booster (4) is aligned with a front end of the mix-flow fan (2); or
a front end of the booster (4) is protrudes from a front end of the mix-flow fan (2).

10. The portable blade-shrouded fan according to claim 6, wherein
a height of the front end of the booster (4) is in a range from 1.4mm to 3.7 mm, the front end of the booster (4) and the housing (1) form the stepped shape to guide a high-pressure airflow generated by the mix-flow fan (2) to flow quickly to the pressurizing member (3).

11. The portable blade-shrouded fan according to claim 1, further comprising:
a handle (5), arranged at a lower side of the housing (1);
a main board (6), at least partially arranged inside the handle (5), wherein the pressurizing seat (31) defines a first cavity (214) having an opening facing to the rear side; one of the plurality of second blades (32) defines a wire-through slot (321) communicating with the first cavity; a wire is arranged to connect a motor (23) to the main board; and the wire extends from the motor (23), passing through the wire-through slot (321), to the main board.

12. The portable blade-shrouded fan according to claim 11, wherein,
the main board (6) has a first side and a second side parallel to the first side, the first side faces toward the rear side, and the second side faces toward the front side;
an end of the wire is connected to the motor (23), and the other end of the wire is connected to the main board and disposed on the first side;
a wire plate (8) is disposed at a rear of the wire-through slot (321) and is configured to limit movement of the wire, two ends of the wire-through slot (321) extend towards the rear side to arrange resisting blocks, the resisting blocks abuts against the wire plate to limit movement of the wire plate on a mounting plane;
an end of the wire plate near the motor (23) extends towards the wire-through slot (321) to be arranged with a snap, the snap extends through the wire-through slot (321) to be snapped with the resisting blocks to limit the wire plate from moving towards the rear side;
an end of the wire plate away from the motor (23) extends toward the wire-through slot (321) to be arranged with an insertion block, the insertion block is inserted in the wire-through slot (321).

13. The portable blade-shrouded fan according to claim 12, wherein
the second side is arranged with a light-emitting member;
the handle defines an opening corresponding to the light-emitting member;
a light guide post (52) is disposed at a side of the wire-through slot (321) away from the motor (23), an end of the light guide post (52) abuts against the second side, the other end of the light guide post (52) is connected to an inside of the handle, and light emitted by the light-emitting member propagates along the light guide post (52) to be emitted out of the fan through the opening of the handle.

14. The portable blade-shrouded fan according to claim 13,
wherein, the booster (4) is connected to a rear side of the second blades (32); a space is defined between the booster (4) and the light guide post (52); the wire passes through the wire-through slot (321) and the space between the booster (4) and the light guide post (52), extends along an outer wall of the booster (4), and is further electrically connected to the first side.

## Patentansprüche

1. Ein tragbarer, klingenverkleideter Ventilator, umfassend:
ein Gehäuse (1), das einen Lufteinlassabschnitt (11) an einer Rückseite des Gehäuses (1) und einen Luftauslassabschnitt (12) an einer Vorderseite des Gehäuses (1) aufweist, wobei der Lufteinlassabschnitt (11) und der Luftauslassabschnitt (12) innerhalb des Gehäuses (1) fluidisch miteinander verbunden sind;
ein Mischstromventilator (2), der innerhalb des Gehäuses (1) angeordnet ist und dazu konfiguriert ist, um eine Rotationswelle (212) herum zu rotieren, um einen Luftstrom zu erzeugen;
ein Druckerzeugungselement (3), das mit einem vorderen Abschnitt des Gehäuses (1) verbunden und vor dem Mischstromventilator (2) angeordnet ist, wobei das Druckerzeugungselement (3) einen Drucksitz (31) und eine Mehrzahl von zweiten Schaufeln (32) umfasst, wobei der Drucksitz (31) eine Druckoberfläche (311) umfasst, die sich in einer radialen Richtung von der Rückseite zur Vorderseite zumindest teilweise vergrößert, wobei die Mehrzahl der zweiten Schaufeln (32) voneinander beabstandet ist und an der Druckoberfläche (311) angeordnet und mit ihr verbunden ist, wobei die Mehrzahl der zweiten Schaufeln (32) mit dem Gehäuse (1) verbunden ist, wobei der durch den Mischstrom erzeugte Luftstrom nach dem Durchströmen der Druckoberfläche (311) in einen Hochdruckluftstrom umgewandelt werden kann, wobei die Mehrzahl der zweiten Schaufeln (32) dazu konfiguriert ist, eine Richtung des Luftstroms neu anzuordnen und ein Geräusch des Luftstroms zu reduzieren, um einen scharfen Klang in einen tiefen Klang umzuwandeln;
wobei der tragbare, klingenverkleidete Ventilator **dadurch gekennzeichnet ist, dass** er weiter umfasst:
einen Booster (4), der innerhalb des Gehäuses (1) angeordnet ist und einen Umfang des Mischstromventilators (2) umgibt;
wobei ein vorderes Ende des Boosters (4) mit einem Abschnitt des Druckerzeugungselements (3), der nahe dem Gehäuse (1) liegt, verbunden ist; wobei ein hinteres Ende des Boosters (4) mit einem Abschnitt des Gehäuses (1), der nahe dem Lufteinlassabschnitt (11) liegt, verbunden ist; wobei das vordere Ende des Boosters (4) gegenüber dem Gehäuse (1) abgestuft ist; und wobei ein Abstand zwischen dem Booster (4) und dem Gehäuse (1) definiert ist.

2. Der tragbare, klingenverkleidete Ventilator gemäß Anspruch 1, wobei der Mischstromventilator (2) einen Rotationssitz (21) und eine Mehrzahl von ersten Schaufeln (22) umfasst;
der Rotationssitz (21) umfasst eine Luftstromführungsfläche (211), die sich in radialer Richtung von der Rückseite zur Vorderseite vergrößert, wobei die Mehrzahl der ersten Schaufeln (22) voneinander beabstandet ist und an der Luftstromführungsfläche (211) angeordnet und mit ihr verbunden ist;
die Luftstromführungsfläche (211) und die Druckoberfläche (311) vergrößern sich in radialer Richtung, sodass sie eine sich nach außen erweiternde Form aufweisen und eine nach außen ausgedehnte Druckrampe bilden, wobei die Druckrampe dazu konfiguriert ist, einen Druckweg des Luftstroms zu vergrößern, und die Druckrampe und das Gehäuse (1) gemeinsam dazu konfiguriert sind, einen scharfen Klang in einen tiefen Klang umzuwandeln;
der Rotationssitz (21) und der Drucksitz (31) liegen direkt nebeneinander und sind axial voneinander beabstandet;
die Luftstromführungsfläche (211) und die Druckoberfläche (311) liegen direkt nebeneinander und sind in axialer Richtung voneinander beabstandet; und
sowohl der Abstand zwischen dem Rotationssitz (21) und dem Drucksitz (31) in axialer Richtung als auch der Abstand zwischen der Luftstromführungsfläche (211) und der Druckoberfläche (311) in axialer Richtung liegt in einem Bereich von 1 mm bis 4 mm, wobei der durch den Mischstromventilator erzeugte Luftstrom so geleitet wird, dass er sich glatt zur Druckoberfläche (311) bewegt, und ein durch turbulente Strömung erzeugtes Geräusch reduziert wird;

3. Der tragbare, klingenverkleidete Ventilator gemäß Anspruch 2, wobei der Rotationssitz (21) eine erste Kammer definiert, die eine Öffnung zur Vorderseite aufweist;
der Drucksitz (31) eine zweite Kammer definiert, die eine Öffnung zur Rückseite aufweist; die erste Kammer und die zweite Kammer überlappen sich zumindest teilweise in radialer Richtung;
der Mischstromventilator (2) umfasst einen Motor (23), der in der ersten Kammer und der zweiten Kammer aufgenommen ist, wobei die Öffnung der ersten Kammer und die Öffnung der zweiten Kammer zueinander ausgerichtet sind und miteinander kommunizieren, um ein vom Motor (23) erzeugtes Geräusch abzuschirmen und einen scharfen Klang in einen tiefen Klang umzuwandeln;

4. Der tragbare, klingenverkleidete Ventilator gemäß Anspruch 1, wobei
ein Querschnitt eines vorderen Abschnitts des Drucksitzes (31), entlang der radialen Richtung genommen, einen Radius von 21,3 mm bis 22 mm aufweist; oder ein Querschnitt eines vorderen Abschnitts des Drucksitzes (31), entlang der radialen Richtung genommen, einen Radius von 28 mm bis 35 mm aufweist, um eine Luftstromfläche zu vergrößern, ohne die Luftstrommenge und den Luftdruck zu verringern; und
eine Dicke des Drucksitzes (31) in in axialer Richtung in einem Bereich von 9,5 mm bis 14,5 mm liegt;

5. Der tragbare, klingenverkleidete Ventilator gemäß Anspruch 1, wobei
ein vorderes Ende des Druckerzeugungselements (3) nach hinten versetzt ist;
eine Frontabdeckung (33) am vorderen Ende des Druckerzeugungselements (3) angeordnet ist, wobei die Frontabdeckung (33) nach hinten versetzt ist, um einen Unterdruckbereich zu bilden, der einen lokalisierten Luftstrom führt, der, nachdem er aus dem Luftauslassabschnitt (12) ausgeflossen ist, an einer Vorderseite der Frontabdeckung (33) entlangströmt, um den Unterdruckbereich auszugleichen und Turbulenzen zu reduzieren;

6. Der tragbare, klingenverkleidete Ventilator gemäß Anspruch 1, wobei
ein erster Kanal (T1) zwischen dem Mischstromventilator (2) und dem Booster (4) gebildet ist, ein zweiter Kanal (T2) zwischen dem Druckerzeugungselement (3) und dem Gehäuse (1) gebildet ist, wobei der erste Kanal (T1) und der zweite Kanal (T2) gemeinsam einen Druckleitkanal bilden, wobei der Luftstrom vom Lufteinlassabschnitt (11) durch den Druckleitkanal bis zum Lüfterauslassabschnitt fließen kann;

7. Der tragbare, klingenverkleidete Ventilator gemäß Anspruch 6, wobei
das Gehäuse (1) ein erstes Gehäuse (1a) und ein zweites Gehäuse (1b), das mit dem ersten Gehäuse (1a) verbunden ist, umfasst; das erste Gehäuse (1a) vergrößert sich zunächst allmählich entlang einer radialen Richtung des Lufteinlassabschnitts (11) von der Vorderseite zur Rückseite und vergrößert sich anschließend entlang der radialen Richtung von der Rückseite zur Vorderseite; das zweite Gehäuse (1b) verjüngt sich allmählich entlang der radialen Richtung von der Rückseite zur Vorderseite; und
der Booster (4) ist vom ersten Gehäuse (1a) beabstandet, um das durch die Rotation des Mischstromventilators (2) erzeugte Geräusch zu absorbieren;

8. Der tragbare, klingenverkleidete Ventilator gemäß Anspruch 6, wobei
der Mischstromventilator (2) einen Rotationssitz (21) umfasst, der Rotationssitz (21) umfasst eine Luftstromführungsfläche (211) und eine Mehrzahl von ersten Schaufeln (22), die Luftstromführungsfläche (211) ist zumindest teilweise allmählich in radialer Richtung von hinten nach vorne vergrößert, und die Mehrzahl der ersten Schaufeln (22) ist auf der Luftstromführungsfläche (211) angeordnet und voneinander beabstandet; der Booster (4) umfasst eine Boosterfläche (41), die dem Mischstromventilator (2) zugewandt ist und zumindest teilweise in radialer Richtung von der Rückseite zur Vorderseite vergrößert ist;

9. Der tragbare, klingenverkleidete Ventilator gemäß Anspruch 6, wobei
ein vorderes Ende des Boosters (4) mit einem vorderen Ende des Mischstromventilators (2) ausgerichtet ist; oder
ein vorderes Ende des Boosters (4) über ein vorderes Ende des Mischstromventilators (2) hinausragt;

10. Der tragbare, klingenverkleidete Ventilator gemäß Anspruch 6, wobei eine Höhe des vorderen Endes des Boosters (4) in einem Bereich von 1,4 mm bis 3,7 mm liegt, wobei das vordere Ende des Boosters (4) und das Gehäuse (1) die gestufte Form bilden, um einen vom Mischstromventilator (2) erzeugten Hochdruckluftstrom schnell zum Druckerzeugungselement (3) zu leiten;

11. Der tragbare, klingenverkleidete Ventilator gemäß Anspruch 1, der ferner Folgendes umfasst:
einen Griff (5), der an der Unterseite des Gehäuses (1) angeordnet ist;
eine Hauptplatine (6), die zumindest teilweise im Griff (5) angeordnet ist, wobei der Drucksitz (31) eine erste Kammer (214) definiert, die eine Öffnung zur Rückseite aufweist; eine der Mehrzahl der zweiten Schaufeln (32) definiert einen Drahtdurchführungsschlitz (321), der mit der ersten Kammer kommuniziert; ein Draht ist angeordnet, um einen Motor (23) mit der Hauptplatine zu verbinden; und der Draht erstreckt sich vom Motor (23), passiert den Drahtdurchführungsschlitz (321) und führt zur Hauptplatine;

12. Der tragbare, klingenverkleidete Ventilator gemäß Anspruch 11, wobei die Hauptplatine (6) eine erste Seite und eine zweite Seite aufweist, die parallel zur ersten Seite ist, wobei die erste Seite zur Rückseite und die zweite Seite zur Vorderseite zeigt; ein Ende des Drahts mit dem Motor (23) verbunden ist, und das andere Ende des Drahts mit der Hauptplatine verbunden und an der ersten Seite angeordnet ist;
eine Drahthalteplatte (8) ist hinter dem Drahtdurchführungsschlitz (321) angeordnet und dazu vorgesehen, die Bewegung des Drahts zu begrenzen, die beiden Enden des Drahtdurchführungsschlitzes (321) erstrecken sich zur Rückseite, um Widerstandsblöcke anzuordnen, die Widerstandsblöcke stoßen gegen die Drahthalteplatte, um die Bewegung der Platte auf einer Montageebene zu begrenzen;
ein Ende der Drahthalteplatte in der Nähe des Motors (23) erstreckt sich zum Drahtdurchführungsschlitz (321), um mit einer Schnappnase versehen zu werden, die Schnappnase erstreckt sich durch den Drahtdurchführungsschlitz (321) und rastet mit den Widerstandsblöcken ein, um zu verhindern, dass sich die Drahthalteplatte zur Rückseite bewegt;
ein Ende der Drahthalteplatte, das vom Motor (23) entfernt ist, erstreckt sich zum Drahtdurchführungsschlitz (321), um mit einem Einfügeblock versehen zu werden, der Einfügeblock ist in den Drahtdurchführungsschlitz (321) eingesetzt;

13. Der tragbare, klingenverkleidete Ventilator gemäß Anspruch 12, wobei die zweite Seite mit einem lichtemittierenden Bauteil versehen ist;
der Griff eine Öffnung definiert, die dem lichtemittierenden Bauteil entspricht;
ein Lichtleitpfosten (52) ist an einer Seite des Drahtdurchführungsschlitzes (321) angeordnet, die vom Motor (23) entfernt ist, ein Ende des Lichtleitpfostens (52) stößt gegen die zweite Seite, das andere Ende des Lichtleitpfostens (52) ist mit dem Inneren des Griffs verbunden, und das vom lichtemittierenden Bauteil ausgestrahlte Licht breitet sich entlang des Lichtleitpfostens (52) aus, um durch die Öffnung des Griffs aus dem Ventilator emittiert zu werden;

14. Der tragbare, klingenverkleidete Ventilator gemäß Anspruch 13, wobei der Booster (4) mit der Rückseite der zweiten Schaufeln (32) verbunden ist; ein Raum zwischen dem Booster (4) und dem Lichtleitpfosten (52) definiert ist; der Draht durch den Drahtdurchführungsschlitz (321) und den Raum zwischen dem Booster (4) und dem Lichtleitpfosten (52) verläuft, entlang einer Außenwand des Boosters (4) geführt wird und darüber hinaus elektrisch mit der ersten Seite verbunden ist;

## Revendications

1. Un ventilateur portable à hélice carénée, comprenant :
un boîtier (1), présentant une portion d'admission d'air (11) sur un côté arrière du boîtier (1) et une portion d'évacuation d'air (12) sur un côté avant du boîtier (1), dans lequel la portion d'admission d'air (11) et la portion d'évacuation d'air (12) sont reliées l'une à l'autre en communication fluidique à l'intérieur du boîtier (1) ;
un ventilateur à flux mixte (2), disposé à l'intérieur du boîtier (1) et configuré pour tourner autour d'un arbre de rotation (212) afin de générer un flux d'air ;
un élément de pressurisation (3), relié à une portion avant du boîtier (1) et disposé à l'avant du ventilateur à flux mixte (2), dans lequel l'élément de pressurisation (3) comprend un siège de pressurisation (31) et une pluralité de secondes pales (32), le siège de pressurisation (31) comprenant une surface de pressurisation (311) qui est au moins partiellement augmentée dans une direction radiale depuis le côté arrière vers le côté avant, la pluralité des secondes pales (32) étant espacées les unes des autres et
étant agencées reliées à la surface de pressurisation (311), la pluralité des secondes pales (32) étant reliée au boîtier (1), le flux d'air généré par le flux mixte étant apte à être converti en un flux d'air haute pression après avoir traversé la surface de pressurisation (311), la pluralité des secondes pales (32) étant configurée pour ré-orienter une direction du flux d'air et pour réduire un bruit du flux d'air afin de convertir un son aigu en un son grave ;
dans lequel le ventilateur portable à hélice carénée est **caractérisé en ce qu'**il comprend en outre :
un amplificateur (4), disposé à l'intérieur du boîtier (1) et entourant une périphérie du ventilateur à flux mixte (2) ;
dans lequel une extrémité avant de l'amplificateur (4) est reliée à une portion de l'élément de pressurisation (3) proche du boîtier (1) ; une extrémité arrière de l'amplificateur (4) est reliée à une portion du boîtier (1) proche de la portion d'admission d'air (11) ; l'extrémité avant de l'amplificateur (4) est décalée par rapport au boîtier (1) ; et un espacement est défini entre l'amplificateur (4) et le boîtier (1).

2. Le ventilateur portable à hélice carénée selon la revendication 1, dans lequel le ventilateur à flux mixte (2) comprend un siège de rotation (21) et une pluralité de premières pales (22) ;
le siège de rotation (21) comprend une surface de guidage du flux d'air (211) qui est augmentée dans la direction radiale depuis le côté arrière vers le côté avant, la pluralité des premières pales (22) étant espacées les unes des autres et étant disposées reliées à la surface de guidage du flux d'air (211) ;
la surface de guidage du flux d'air (211) et la surface de pressurisation (311) sont augmentées dans la direction radiale pour avoir une forme évasée et pour former une rampe de pressurisation s'élargissant vers l'extérieur, dans laquelle la rampe de pressurisation est configurée pour augmenter un trajet de pressurisation du flux d'air, et la rampe de pressurisation et le boîtier (1) sont configurés de manière coopérative pour convertir un son aigu en un son grave ;
le siège de rotation (21) et le siège de pressurisation (31) sont directement adjacents l'un à l'autre et sont espacés l'un de l'autre axialement ;
la surface de guidage du flux d'air (211) et la surface de pressurisation (311) sont directement adjacentes l'une à l'autre et sont espacées l'une de l'autre dans une direction axiale ; et
tant l'espacement entre le siège de rotation (21) et le siège de pressurisation (31) dans la direction axiale que l'espacement entre la surface de guidage du flux d'air (211) et la surface de pressurisation (311) dans la direction axiale est compris dans une plage allant de 1 mm à 4 mm, afin de guider le flux d'air généré par le ventilateur à flux mixte à s'écouler de manière fluide vers la surface de pressurisation (311) et de réduire un bruit généré par un écoulement turbulent ;

3. Le ventilateur portable à hélice carénée selon la revendication 2, dans lequel le siège de rotation (21) définit une première chambre ayant une ouverture orientée vers le côté avant ;
le siège de pressurisation (31) définit une deuxième chambre ayant une ouverture orientée vers le côté arrière ;
la première chambre et la deuxième chambre se chevauchent au moins partiellement l'une avec l'autre dans la direction radiale ;
le ventilateur à flux mixte (2) comprend un moteur (23) reçu dans la première chambre et la deuxième chambre, l'ouverture de la première chambre et l'ouverture de la deuxième chambre étant orientées l'une vers l'autre et communiquant entre elles, afin de protéger du bruit généré par le moteur (23) et de convertir un son aigu en un son grave ;

4. Le ventilateur portable à hélice carénée selon la revendication 1, dans lequel une section transversale d'une portion avant du siège de pressurisation (31), prise selon la direction radiale, présente un rayon de 21,3 mm à 22 mm ; ou une section transversale d'une portion avant du siège de pressurisation (31), prise selon la direction radiale, présente un rayon de 28 mm à 35 mm afin d'augmenter une aire de flux d'air sans réduire une quantité de flux d'air ni une pression d'air ; et
une épaisseur du siège de pressurisation (31) dans une direction avant-arrière est comprise dans une plage de 9,5 mm à 14,5 mm ;

5. Le ventilateur portable à hélice carénée selon la revendication 1, dans lequel une extrémité avant de l'élément de pressurisation (3) est en retrait vers le côté arrière ; un couvercle avant (33) est disposé à l'extrémité avant de l'élément de pressurisation (3), le couvercle avant (33) étant en retrait vers le côté arrière afin de former une zone de pression négative pour guider un flux d'air localisé, qui, après être sorti de la portion d'évacuation d'air (12), s'écoule en se collant le long d'une surface avant du couvercle avant (33) afin de compenser la zone de pression négative et de réduire la turbulence ;

6. Le ventilateur portable à hélice carénée selon la revendication 1, dans lequel un premier canal (T1) est formé entre le ventilateur à flux mixte (2) et l'amplificateur (4), un deuxième canal (T2) est formé entre l'élément de pressurisation (3) et le boîtier (1), le premier canal (T1) et le deuxième canal (T2) formant de manière coopérative un canal de conduction de pressurisation, le flux d'air étant capable de s'écouler depuis la portion d'admission d'air (11), en passant par le canal de conduction de pressurisation, pour atteindre la portion de sortie du ventilateur ;

7. Le ventilateur portable à hélice carénée selon la revendication 6, dans lequel le boîtier (1) comprend un premier boîtier (1a) et un deuxième boîtier (1b) relié au premier boîtier (1a) ; le premier boîtier (1a) est d'abord progressivement augmenté le long d'une direction radiale de la portion d'admission d'air (11) depuis le côté avant vers le côté arrière et est ensuite augmenté le long de la direction radiale depuis le côté arrière vers le côté avant ; le deuxième boîtier (1b) est progressivement diminué le long de la direction radiale depuis le côté arrière vers le côté avant ; et
l'amplificateur (4) est espacée du premier boîtier (1a) afin d'absorber le bruit généré par la rotation du ventilateur à flux mixte (2) ;

8. Le ventilateur portable à hélice carénée selon la revendication 6, dans lequel le ventilateur à flux mixte (2) comprend un siège de rotation (21), le siège de rotation (21) comprend une surface de guidage du flux d'air (211) et une pluralité de premières pales (22), la surface de guidage du flux d'air (211) étant au moins partiellement progressivement augmentée dans la direction radiale de l'arrière vers l'avant, la pluralité des premières pales (22) étant disposées sur la surface de guidage du flux d'air (211) et étant espacées les unes des autres ;
l'amplificateur (4) comprend une surface d'amplification (41) faisant face au ventilateur à flux mixte (2) et étant au moins partiellement augmentée dans la direction radiale depuis le côté arrière vers le côté avant ;
au moins une portion de la surface de guidage du flux d'air (211) et au moins une portion de la surface de pressurisation (311) sont en retrait radial pour former une surface concave, au moins une portion de la surface de pressurisation (311) est en saillie radiale pour former une surface convexe ; un volume à l'intérieur du canal de conduction de pressurisation est augmenté afin de concentrer le flux d'air ;
un écart radial minimal entre les premières pales (22) et la surface de pressurisation (311) est maintenu dans une plage d'erreur d'une distance de séparation équivalente afin d'empêcher le flux d'air à une extrémité avant du flux mixte de contourner l'écart radial minimal et de s'écouler en sens inverse vers l'extrémité arrière du flux mixte ;

9. Le ventilateur portable à hélice carénée selon la revendication 6, dans lequel un extrémité avant de l'amplificateur (4) est alignée avec l'extrémité avant du ventilateur à flux mixte (2) ; ou
une extrémité avant de l'amplificateur (4) dépasse de l'extrémité avant du ventilateur à flux mixte (2) ;

10. une hauteur de l'extrémité avant de l'amplificateur (4) est comprise dans une plage de 1,4 mm à 3,7 mm, l'extrémité avant de l'amplificateur (4) et le boîtier (1) formant la forme en marche afin de guider un flux d'air à haute pression généré par le ventilateur à flux mixte (2) à s'écouler rapidement vers l'élément de pressurisation (3) ;

11. Le ventilateur portable à hélice carénée selon la revendication 1, qui comprend en outre :
une poignée (5), disposée sur le côté inférieur du boîtier (1) ;
une plaque principale (6), au moins partiellement disposée à l'intérieur de la poignée (5), dans laquelle le siège de pressurisation (31) définit une première cavité (214) ayant une ouverture orientée vers le côté arrière ; l'une des pales de la pluralité de deuxièmes pales (32) définit une fente de passage de fil (321) communiquant avec la première cavité ; un fil est disposé pour connecter un moteur (23) à la plaque principale ; et le fil s'étend depuis le moteur (23), passant par la fente de passage de fil (321), jusqu'à la plaque principale

12. Le ventilateur portable à hélice carénée selon la revendication 11, dans lequel la plaque principale (6) comprend un premier côté et un second côté parallèle au premier côté, le premier côté faisant face au côté arrière et le second côté faisant face au côté avant ;
une extrémité du fil est connectée au moteur (23), et l'autre extrémité du fil est connectée à la plaque principale et disposée sur le premier côté ;
une plaque de retenue de fil (8) est disposée à l'arrière de la fente de passage de fil (321) et est configurée pour limiter le mouvement du fil, les deux extrémités de la fente de passage de fil (321) s'étendent vers le côté arrière pour disposer des blocs de retenue, les blocs de retenue appuient contre la plaque de retenue de fil afin de limiter le mouvement de la plaque sur un plan de montage ;
une extrémité de la plaque de retenue de fil proche du moteur (23) s'étend vers la fente de passage de fil (321) pour être pourvue d'un clip, le clip s'étend à travers la fente de passage de fil (321) pour s'emboîter avec les blocs de retenue afin d'empêcher la plaque de retenue de fil de se déplacer vers le côté arrière ;
une extrémité de la plaque de retenue de fil éloignée du moteur (23) s'étend vers la fente de passage de fil (321) pour être pourvue d'un bloc d'insertion, le bloc d'insertion étant inséré dans la fente de passage de fil (321) ;

13. Le ventilateur portable à hélice carénée selon la revendication 12, dans lequel le second côté est pourvu d'un élément émetteur de lumière ;
la poignée définit une ouverture correspondant à l'élément émetteur de lumière ;
un poteau-guide de lumière (52) est disposé sur un côté de la fente de passage de fil (321) éloigné du moteur (23), une extrémité du poteau-guide de lumière (52) appuie contre le second côté, l'autre extrémité du poteau-guide de lumière (52) est connectée à l'intérieur de la poignée, et la lumière émise par l'élément émetteur de lumière se propage le long du poteau-guide de lumière (52) pour être émise hors du ventilateur par l'ouverture de la poignée ;

14. Le ventilateur portable à hélice carénée selon la revendication 13, dans lequel l'amplificateur (4) est connecté au côté arrière des deuxièmes pales (32) ; un espace est défini entre l'amplificateur (4) et le poteau-guide de lumière (52) ; le fil passe à travers la fente de passage de fil (321) et l'espace entre l'amplificateur (4) et le poteau-guide de lumière (52), s'étend le long d'une paroi extérieure de l'amplificateur (4), et est en outre connecté électriquement au premier côté ;
